# EUROPEAN PATENT APPLICATION

(11) **EP 1 245 255 A2**
(43) Date of publication of application: **02.10.2002**
(21) Application number: 02251608.2
(22) Date of filing: 07.03.2002
(51) Int. Cl.: A63F 13/12

(54) **Game screen switching method performed in game machine and network game system, and program for executing the method**

(30) Priority: 30.03.2001 JP 2001100661
(71) Applicant: Konami Co., Ltd., Tokyo (JP)
(72) Inventor: Sobue, Seiji, 4-1-23 Shiba, Minato-ku, Tokyo (JP)
(74) Representative: Haley, Stephen

(57) **Abstract**

In a method of switching a game screen displayed to each of a plurality of players who controls an associated character in a game, a first game screen is prepared so as to display at least a first character controlled by a first player and a second character controlled by a second player among the plural characters. The first game screen is displayed to at least the first player and the second player. When an encounter between the first character and the second character on the first game screen is detected, a field having a predetermined range on the first game screen is defined so as to include the first character and the second character. A second game screen is prepared so as to display the detected characters existing in the field while retaining their relative position relationship defined in the first game screen. The second game screen is displayed to the players who control the characters displayed therein.

## Description

The present invention relates to a game screen switching method, and more particularly, to a game screen switching method performed in a game machine or a network game system, and a program which effect switching of a screen under predetermined conditions.

Video games have recently and rapidly become pervasive in homes and amusement arcades. Further, the types of games range widely, and include role-playing games, simulation games, fighting games, and puzzle games. Further, many types of software for executing games have already been developed and sold. There are many types of game machines for implementing software. For instance, some game machines, called home game machines, use a TV set for displaying a game screen, whereas other game machines come in the form of personal computers or work stations and use a CRT display. Moreover, still other game machines, called arcade game machines, are to be installed in an amusement arcade and are constructed integrally with a display device.

In some games, a player battles with enemy characters by directly controlling a main character, or by controlling vehicles or weapons accompanied with the main character. The primary objective of some games is to battle with such enemy characters, and some games include battles as a part of the overall story. Throughout the specification, games including battles (combat) are hereinafter called "battle games."

A common feature among battle games is that a player performs battles by controlling a main character. Opponent characters may be enemy characters controlled by a computer or another player.

Such a battle game is not always limited to a one-on-one confrontation and may assume a one-to-many confrontation. In a typical game, one player participates in a game and controls one main character. A plurality of opponents; that is, a plurality of enemy characters, battle against the main character simultaneously or on a per-stage basis. Here, actions of the enemy characters in the game are usually controlled by a computer.

In some of one-to-many battle games, the enemy characters are controlled by other individual players.

There is also a many-to-one battle game, in which a plurality of main characters battle against one enemy character. In this case, a plurality of players control corresponding main characters, to thereby battle against an enemy character controlled by the computer or another player.

Further, many-to-many battle games have recently become available. In a game of this type, a plurality of allies battle against a plurality of enemy characters. Each of the enemy characters and allies is usually controlled by one player. Therefore, from the viewpoint of a single player, a character controlled by the player is a main character and has comrades as allies, and a plurality of enemy characters attack the main character and his allies. This status also applies to all other players participating in the game.

A game machine implementing such a battle game ranges widely in accordance with a battle pattern. The most-widely used game machine is a home game machine. Particularly, the home game machine has widely been used for playing a one-to-one battle game, wherein one player controls a main character to battle against enemy characters, through use of a computer; that is, the home game machine. If two controllers are available, two players can play a one-to-one battle game. In this case, the players' instructions are delivered to a common game machine via a controller and is displayed on one TV monitor. Usually, one game screen is offered during the course of a game.

A so-called arcade game machine installed in an amusement arcade enables a plurality of players to play a game while viewing game screens edited for respective players. Therefore, such a game machine is suitable for a game in which two or more players are to battle against one another. Players' instructions are collected at one location by way of predetermined lines, and required computation is performed at that location, thereby editing game screens for respective players. A typical example of such a game is a racing game in which players act as drivers and compete with each other for a win.

A personal computer enables implementation of such a battle game. In its early stage of development, a personal computer was employed primarily for use with a one-to-one battle game which can be executed by the home game machine. Since the majority of personal computers have a network connecting function, a personal computer is suitable for use with a network game in association with recent development of the Internet. Recently, the home game machine has also been provided with a network connecting function, thereby enabling implementation of a network game.

Here, a network game means one in which a plurality of players battle with each other by controlling one alliance character or enemy character via a network such as the Internet. Players participate in a game by utilizing personal computers or like devices connected to the Internet, thereby battling against enemy characters along with other players who have entered the game by way of other computers or battling against other players in the form of an alliance-to-enemy confrontation.

In relation to the various game machines or battle games to be effected in various battle patterns, which have been described previously, the game machine expresses that a main character proceeds to a grass field or a cavern with a view towards acquiring treasure or a specific object when requirements for a battle have been satisfied as a result of a main (alliance) character having met an enemy character. In many battle games, control is performed so as to effect switching from a field screen which has appeared on a screen thus far to a battle screen for detailed display of an actual battle scene.

The battle screen is displayed in an enlarged manner or from the viewpoint of the main character, for the purpose of displaying in more detail the expressions or actions of the main character, those of the alliance characters, and those of enemy characters. Switching between screens is effected with a view toward indicating that instructions or a series of instructions entered by way of a controller manipulated by the player have been brought into an actual battle mode. For instance, on a field screen there is issued an instruction with regard to effecting movement of the main character by way of a controller. In contrast, on a battle screen a change is effected such that an instruction is issued for selecting the nature of attack or instructing presence or absence of an attack/defense method by the controller.

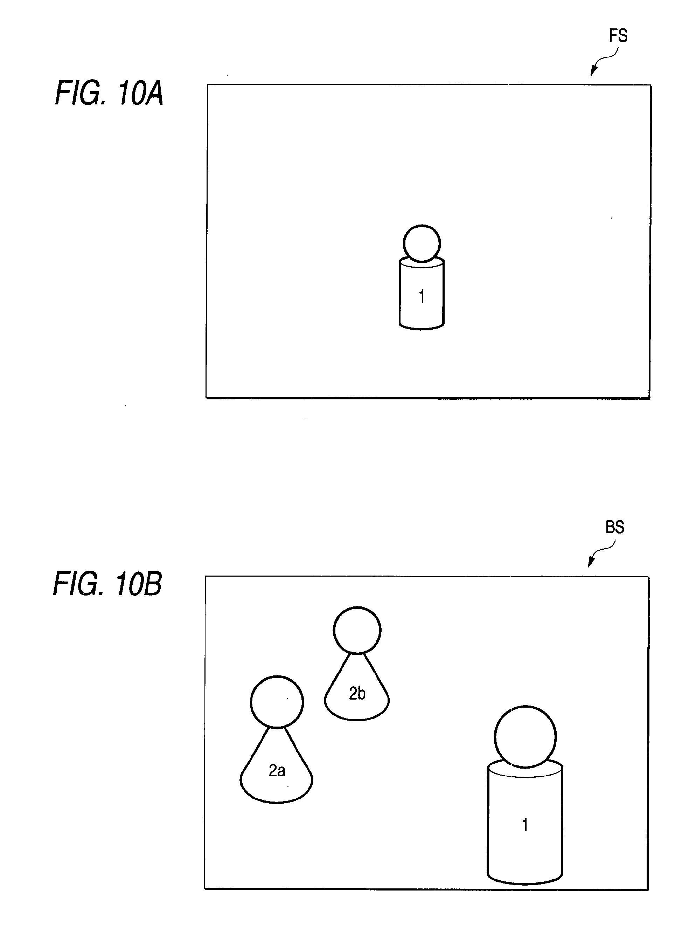

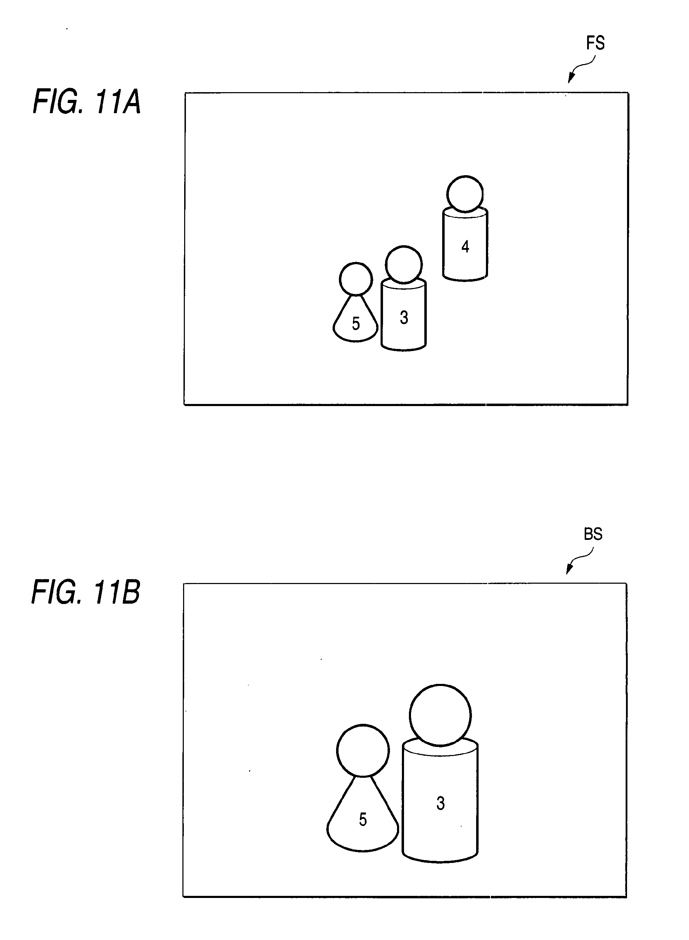

A first related-art screen switching method will be described by reference to Figs. 10A and 10B, and a second related-art screen switching method will be describe by reference to Figs. 11A and 11B.

As shown in Fig. 10A, in the first related-art example, a main character 1 controlled by a player is displayed on a field screen FS. In accordance with instructions from the player, the main character 1 moves within a field. At this point in time, no enemy characters appear in the field.

Next, a game program considers that the main character 1 has come across an enemy character 2 at a certain point in time with a specified probability. At this time, the field screen is switched to a battle screen BS shown in Fig. 10B. In addition to the main character 1, other enemy characters 2 (2a and 2b) which have not been displayed thus far on a field screen FS newly appear on the screen. There may be a case where the battle screen BS is displayed from the viewpoint of the main character 1. More specifically, in this case, only the enemy characters 2a and 2b appear on the battle screen BS.

Only the main character 1 appears on the field screen FS shown in Fig. 10A. In a case where the main character 1 actually travels with two allies, when the field screen FS has been switched to the battle screen BS, three characters consisting of main characters 1a, 1b, and 1c may appear.

In relation to the second related-art example, as shown in Fig. 11A, a main character 3 controlled by the player, an alliance character 4 who allies himself to the main character 3, and an enemy character 5 appear on the field screen FS. The main character 3 moves within a field in accordance with instructions from the player.

The game program monitors whether or not the main character 3 has come across the enemy character 5. When the main character 3 has come across the enemy character 5, the field screen FS is switched to the battle screen BS shown in Fig. 11B. Only the main character 3 who has personally come across the enemy and the enemy character 5 appear on the battle screen BS.

As in the case of the example shown in Fig. 10, characters appearing within the field screen FS are displayed collectively. There may be a case where the characters are developed to a plurality of characters on the battle screen BS. There may also be a case where the characters are displayed from the viewpoint of the main character 3.

Such a related-art game screen switching method involves the following drawbacks.

In the case of the first related-art example in which no enemy characters appear on the field screen FS, the field screen FS is suddenly switched to the battle screen BS at an unexpected point in time, and enemy characters appear by surprise, thereby commencing a battle. Such appearance of enemy characters may provide the player with an element of surprise but fails to provide a plot. Thus, a player's intention of participating in or avoiding battle cannot be reflected on the game.

In relation to the second related-art example, when the main character has encountered an enemy character within a field, the main character and the enemy character, who have encountered each other, appear on a battle screen BS. In this example, characters who are irrelevant to the encounter are not displayed on the battle screen BS. Hence, other characters which are located near the battle must be within the sight of the player but are not displayed on the battle screen BS, thus imparting an unnatural impression to the player.

Assuming that the game screen switching method according to the second related-art example is applied to a game (e.g., the network game described previously) in which a plurality of players control corresponding characters and the game machine offers images that differ from player to player; e.g., images viewed from individual characters, players controlling alliance characters who have not yet encountered enemy characters can ascertain, by way of a field screen FS, that another alliance character has encountered an enemy character. Subsequently, even when an alliance character having not encountered enemy characters has come across the enemy character, no new battle screen BS appears, because the other alliance player has already battled against the enemy character, and neither control nor display operation are effected for prompting the player to participate in the battle. The same also applies to a player who has participated in the game by controlling an enemy character.

The present invention aims at providing a game screen switching method of effecting a control operation such that all characters located within a certain range from a position where encounter has arisen are displayed on a field screen upon satisfaction of a certain requirement, such as an encounter arising between an alliance character and an enemy character.

The present invention also aims at providing a game screen switching method for use in a game, in which a plurality of players control corresponding characters, and images differing from player to player, such as images viewed from respective characters, are provided. When a certain character has satisfied a requirement, such as encounter, battle arises between the character and an encountered character. Further, characters located within a predetermined range from the battle are involved in the battle (a battle screen is provided for all players who control characters located within the range). The occurrence of a battle, involvement of the characters located within a predetermined range into the battle, and the predetermined range are displayed for players who control characters located outside the range.

The present invention also aims at providing a game screen switching method for use in a game, in which a plurality of players control corresponding characters, and images differing from player to player, such as images viewed from respective characters, are provided. On the basis of an assumption that battle is started within a predetermined range as a result of a certain character having satisfied a requirement such as encounter, when characters located outside the range have entered the range, the characters can participate in the battle, and corresponding battle screens are displayed for players who control the characters.

The present invention also aims at providing a game screen switching method for use in a game, in which a plurality of players control corresponding characters, and images differing from player to player, such as images viewed from respective characters, are provided. On the basis of an assumption that battle is started within a predetermined range as a result of a certain character having satisfied a requirement such as encounter, when characters located within the range have gone outside the range, a field screen showing the range of battle is again displayed for players controlling the characters.

Under the game screen switching method according to the present invention, when an alliance character and an enemy character satisfy a predetermined requirement, such as occurrence of encounter, a battle screen displaying characters located within a predetermined range from the position where encounter has arisen is displayed for a player who plays the character. Under the above-described state, the predetermined range is displayed on a field screen as a range where battle is being performed. When a character located outside the range has entered the range, the character is displayed on the battle screen. The battle screen is provided to players who control the characters located within the range.

In order to realize the above, according to the present invention, there is provided a method of switching a game screen displayed to each of a plurality of players who controls an associated character in a game, comprising the steps of:
preparing a first game screen in which at least a first character controlled by a first player and a second character controlled by a second player among the plural characters are displayed;
displaying the first game screen to at least the first player and the second player;
detecting an encounter between the first character and the second character on the first game screen;
defining a field having a predetermined range on the first game screen so as to include the first character and the second character, when the encounter is detected;
detecting whether a character other than the first character and the second character is in the defined field;
preparing a second game screen in which the detected characters existing in the field are displayed while retaining their relative position relationship defined in the first game screen; and
displaying the prepared second game screen to the players who control the characters displayed therein.

Regardless of whether to perform a battle, characters located within the field play a game appearing on the screen of next stage in a game, such as a battle screen.

Preferably, the method further comprises the steps of:
editing the first game screen so as to display the field and the characters existing within the field, when a third character controlled by a third player is outside of the field; and
displaying the edited first game screen to the third player.

As a result, players who control characters remaining on the first game screen can play a game in which details of the second game screen are schematically displayed.

According to the present invention, there is also provided a game machine, comprising:
a plurality of displays, each displaying a game screen to each of a plurality of players who controls an associated character in a game;
a plurality of controllers, each provided for the players to control the associated characters;
a first screen generator, which prepares a first game screen in which at least a first character controlled by a first player and a second character controlled by a second player among the plural characters are displayed;
a first screen provider, which provides the first game screen to displays for at least the first player and the second player;
a first detector, which detects an encounter between the first character and the second character on the first game screen;
a field generator, which defines a field having a predetermined range on the first game screen so as to include the first character and the second character, when the first detector detects the encounter;
a second detector, which detects whether a character other than the first character and the second character is in the defined field;
a second game screen generator, which prepares a second game screen in which the detected characters existing in the field are displayed while retaining their relative position relationship defined in the first game screen; and
a second game screen provider, which provides the prepared second game screen to displays for the players who control the characters displayed therein.

As a result, regardless of whether to perform a battle, the characters located within the field can play a game appearing on a screen of next stage, such as a battle screen.

According to the present invention, there is also provided a network game system for performing a game in which a plurality of characters are controlled by associated players, comprising:
a network;
a plurality of game machines connected with each other via the network, each game machine associated with each of the players;
a display provided in each game machine, which displays a first game screen to the associated player;
a controller provided in each game machine, through which the associated player controls an associated character;
a memory provided in one of the game machines, to which each game machine accesses to store a first data indicating a position of the associated character on the first game screen;
a first display controller, provided in each game machine, which moves the associated character displayed on the first game screen, in accordance with an instruction input from the associated player via the controller, and which updates the first data so as to indicate a moved position;
a first detector, provided in each game machine, which detects an encounter between the associated character and another characters with reference to the first data, every time when the associated character is moved;
a field generator, provided in each game machine, which defines a field having a predetermined range on the first game screen so as to include the encountered character, when the first detector detects the encounter, and which stores a second data indicating a position of the field; and
a second display controller, provided in each game machine, which prepares a second game screen in which characters existing in the field are displayed with reference to the first data, while retaining their relative position relationship defined in the first game screen, and which switches the first game screen to the second game screen when the associated character is in the field.

As a result, when there is performed a game in which a plurality of players control characters by way of the network, regardless of whether to perform a battle, the characters located within the field appear on a game screen of next stage, such as a battle screen.

According to the present invention, there is also provided a program for causing a computer to execute the above game switching method.

As a result, players who control characters located within the field can play a game appearing on a screen of next stage, such as a battle screen.

In the Drawings;

The above objects and advantages of the present invention will become more apparent by describing in detail preferred exemplary embodiments thereof with reference to the accompanying drawings, wherein:
Fig. 1 is a block diagram showing a first embodiment of a video game machine which implements a game screen switching method according to the invention;
Fig. 2 is a block diagram showing a second embodiment of a video game machine which implements the game screen switching method according to the invention;
Fig. 3 is a conceptual rendering for describing the concept of a network game;
Figs. 4A and 4B are illustrations showing switching between game screens appearing when alliance characters have encountered enemy characters;
Fig. 5 is a flowchart for controlling switching between the game screens shown in Figs. 4A and 4B;
Figs. 6A and 6B are illustrations showing example screens appearing when the game screens shown in Figs. 4A and 4B are provided for other players;
Figs. 7A and 7B are illustrations showing an example of game screen displayed in connection with a character C shown in Figs. 4A and 4B;
Fig. 8 is a flowchart for controlling switching between the game screens shown in Figs. 7A and 7B;
Fig. 9 is an illustration showing an example of game screen appearing when another character has made encounter after encounter has already arisen between characters;
Figs. 10A and 10B are illustrations showing a game screen switching method according to a first related-art example; and
Figs. 11A and 11B are illustrations showing a game screen switching method according to a second related-art example.

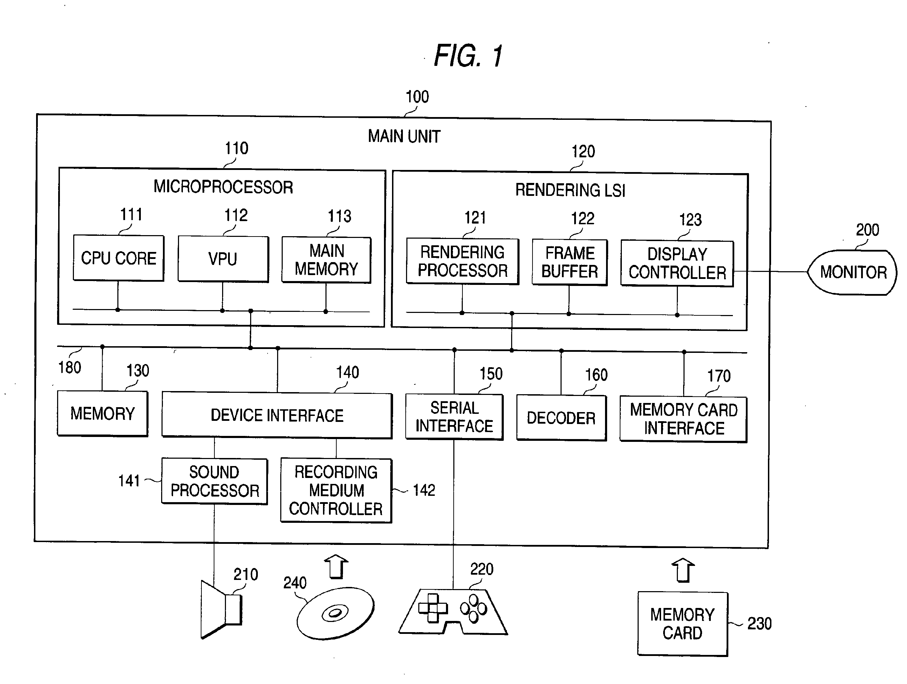

There will first be described, by reference to Fig. 1, a first embodiment of a video game system (game machine) which implements a game screen switching method according to the present invention.

A game system shown in Fig. 1 represents a home game machine comprising a main unit 100; a monitor 200 connected thereto; a speaker 210, and a controller 220.

The main unit 100 comprises a microprocessor 110 for controlling individual constituent elements; a rendering LSI (large scale integrated circuit) 120 for preparing primarily an image; other constituent elements 130 through 170 (described later); and a bus 180 interconnecting the elements.

The microprocessor 110 includes a CPU (central processing unit) core 111, a VPU (vector processing unit) 112, and a main memory 113, which are interconnected by way of an internal bus. The CPU core 111 includes, for example, two 64-bit ALUs (arithmetic and logic unit) and one FPU (floating point unit). The VPU 112 performs processing for floating point data. The VPU 112 is constituted of two VPUs; for example, a VPU 0 and a VPU 1.

The rendering LSI 120 includes a rendering processor 121; a frame buffer 122, and a display controller 123. These elements are interconnected by way of an internal bus. The monitor 200 is connected to the display controller 123. The rendering processor 121 is specialized for rendering processing and is another processor differing from the microprocessor 110. The processor 121 performs transformation of a coordinate system and computation of a light source for displaying a virtual three-dimensional image including polygonal images, rendering operation, and pasting of a texture. The frame buffer 122 consists of a display area and a non-display area. The display area is an area which corresponds to a display screen on the monitor 200 in a one-to-one relationship and at which image data are expanded.

Here, the monitor 200 is, for example, a home TV set.

A memory 130 is utilized in connection with I/O processing, including loading of data from a recording medium 240. Usually, DRAM (dynamic random access memory) is utilized for the memory 130.

A device interface 140 performs audio control operation or controls input/output data. A sound processor 141 and a recording medium driver 142 are connected to the device interface 140.

The sound processor 141 performs a control operation such that game sound effects or like sounds are output at a predetermined timing from the speaker 210 connected to the processor 141. More specifically, in accordance with an instruction output from the microprocessor 110, ADPCM (adaptive differential pulse code modulation) data loaded from the recording medium 240 or sound data stored in a sound buffer (not shown) are reproduced, or sound data are reproduced through modulation, thereby producing musical sounds or sound effects by way of the speaker 210.

Here, the speaker 210 is, for example, a speaker housed in a home TV set.

The recording medium driver 142 loads data stored in the recording medium 240 and transfers the thus-loaded data to the memory 130 or the main memory 113. A program and image data to be used for carrying out a game are included in the recording medium 240. The game program is read by the driver 142, and the thus-read program is loaded into the main memory provided within the microprocessor 110. Here, the recording medium 240 is a portable recording medium; e.g., DVD-ROM, CD-ROM, or a floppy disk.

The controller 220 is connected to a serial interface 150. A player of the game instructs action of a character through use of the controller 220. There may be a case where the serial interface 150 is constructed so that a plurality of controllers 220 can be connected to the serial interface 150, thereby enabling execution of a multiplayer battle game.

A signal output from the controller 220 is transmitted to the CPU core 111 via the interface 150. In accordance with the game program stored in the main memory 113, the CPU core 111 performs processing corresponding to an instruction. The CPU core 111 sends an instruction to the rendering LSI 120 such that an image reflecting the instruction is finally displayed on the monitor 200.

The controller 220 is equipped with, e.g., UP, DOWN, RIGHT, and LEFT buttons for instructing upward, downward, rightward, and leftward movement of a character, and a plurality of function buttons to be used for instructing a specific function such as a start operation or a selecting operation.

A decoder 160 decodes still image data or motion image data, which have been read from the recording medium 240 and stored in the main memory 113, and stores the thus-decoded data back into the main memory 113. Specifically, the decoder 160 performs inverse DCT (discrete cosine transform) operation at high speed, thereby enabling expansion of compressed data of, e.g., a still color image compression standard (so-called JPEG) or accumulated-media-based motion picture encoding standard (so-called MPEG).

When a memory card 230 is inserted into the memory card interface 170, the interface 170 reads data from the memory card 230. On the basis of a determination rendered by the CPU core 111, the memory card interface 170 loads the data into the main memory 113.

The bus 180 acts as a general-purpose data transfer channel for transferring data among constituent elements connected to the bus.

The memory card 230 preserves game parameters in order to save, e.g., the state of a game at the time of end of the game. The memory card interface 170 is provided with two memory card insert slots so as to enable, during a game involving battle between two players, simultaneous loading of data from two memory cards 230 corresponding to two players. However, the present invention is not limited to the usage of the above card type memory.

A portable game machine (not shown) is connected to the memory interface 170, and a game program and game data are stored in the portable game machine, thereby enabling a player to enjoy playing a game outdoors.

Although not shown in Fig. 1, the main unit 100 may have a USB (universal serial bus) interface or an IEEE (Institute of Electrical and Electronics Engineers) 1394 interface. By way of such an interface, data can be exchanged with external equipment having the same interface. Further, so long as the main unit 100 is provided with a network interface (not shown), the main unit 100 can be connected to a network such as the Internet, thereby enabling execution of a network game with another game machine or a personal computer.

When the video game system is used as an arcade game machine in an amusement arcade, the main unit 100, the monitor 200, the speaker 210, and the controller 220 of the constituent elements shown in Fig. 1 are accommodated in one housing.

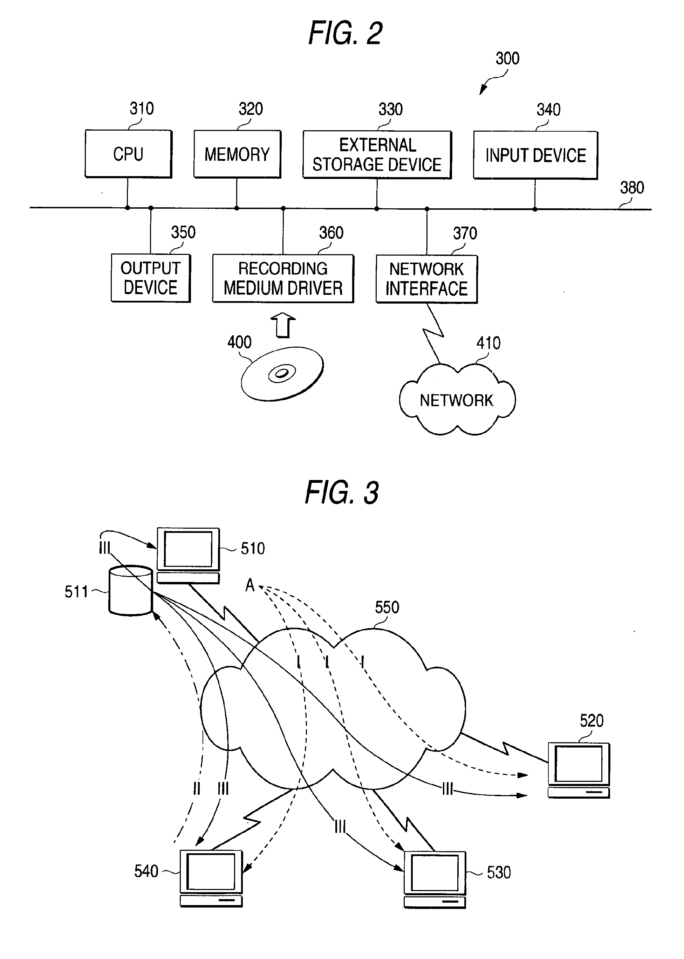

A second embodiment of the game machine which implements the game screen switching method according to the present invention will now be described by reference to Fig. 2.

In the second embodiment, a personal computer is used with a game machine. The personal computer 300 comprises a CPU 310; a memory 320; an external storage device 330; an input device 340; an output device 350; a recording medium driver 360; a network interface 370; and a bus 380 for interconnecting these devices.

In accordance with an instruction issued from the game program, the CPU 310 analyzes the player's instruction, performs required data processing operation in accordance with the instruction, performs control operation for displaying a game screen, and performs control operation for outputting sounds such as sound effects. Data including a game program and image data are temporarily loaded into the memory 320, and the thus-loaded data are utilized by the CPU 310, as required. The memory 320 generally consists of DRAM.

The external storage device 330 stores ordinary game programs, image data to be used in games, and data pertaining to character statuses. For example, the external storage device 330 is a mass-storage secondary storage device such as a hard disk drive.

The input device 340 is a keyboard or mouse used by a player to instruct characters' actions. There may be a case where a joystick is used for gaming purpose.

The output device 350 corresponds to, for example, a CRT monitor for displaying a game screen, or a speaker for outputting game sound effects or sounds. The recording medium driver 360 loads data from the recording medium 400 and transfers the thus-loaded data to the memory 320 or the external storage device 330, as required. Game programs and image data required for effecting games are recorded on a recording medium.

The network interface 370 connects the personal computer 30 to a network 410 such as the Internet. More specifically, the network interface 370 may be a serial interface or LAN (local area network) board to be connected to a modem used for establishing connection with an Internet provider.

By such a configuration, the player enables display of a game screen or can listen to sound effects in accordance with the player's instruction, as in the case of the game machine specifically designed for use with a game, the game machine having been described in connection with Fig. 1.

The game screen switching method according to the present invention can be implemented, by hardware of such configurations. However, the characteristic of the game screen switching method can be exhibited most effectively when hardware is embodied so as to enable performance of a network game in which a plurality of players can play a game simultaneously.

The configuration of the network game will now be described by reference to Fig. 3.

There will now be described an example in which a network game is played by way of personal computers (PCs) 510 through 540 installed in different locations; e.g., individual homes. The PCs 510 through 540 are connected to a network 550, and data can be exchanged among the PCs. The network 550 is a network such as the Internet. Each of the PCs 510 through 540 is connected to the Internet by way of a server of an Internet provider and the network interface described previously.

In this way, the network game is to be played among a plurality of PCs capable of exchanging data. A player operating the PC usually controls one character assigned to the player. Characters are placed in a single common situation within a game. The situation and an image captured by each character appear on a display connected to the PC of each player.

By such a network game, the players can simultaneously enjoy playing a single game without a necessity of gathering at the same amusement arcade or home.

The essential mechanism of the network game will next be described. Here, among typical operation modes of the network game, an example operation mode of IP address-specified type (i.e., a personal server type) will be described.

The game participants are brought into a state in which they can communicate with each other by utilization of a chat tool such as an Internet relay chat (IRC). Of the game participants, a person who desires to handle his/her PC as a game server; that is, who desires to become a host, looks up his IP address and lets persons who desire to participate in a game know the IP address. Referring to Fig. 3, a PC 510 is shown as a game server, and an IP address (e.g., address A) thereof is delivered to participants PC 520, PC 530, and PC 540 (indicated by arrows I shown in Fig. 3).

The PC that has become a game server manages, in a unified way, character statuses and the state of progress in a game.

The player of the PC 510 (host) activates a network game as a host mode, whilst the players of the PC 520 through PC 540 activate the network game as a participation mode from their PCs. At this time, an IP address delivered from the host is input into the network game. As a result, information about input operation required for controlling a character in a subsequent game is sent to the PC 510 that acts as a game server, through use of the IP address.

For instance, the player of the PC 540 shown in Fig. 3 enters an instruction by way of an input device connected to the PC 540, such as a mouse or joystick, for controlling a character assigned to the player. The thus-entered instruction is sent to the PC 510 by way of the Internet. Details of the instruction or a game screen eventually prepared in accordance with the instruction are temporarily stored in memory 511 (indicated by an arrow II shown in Fig. 3).

Similar players' instructions are sent from the PCs 503, 520, and 510. Upon receiving any instruction, the PC 510 acting as a game server performs required arithmetic operations, thereby preparing a game screen reflecting the instruction. The thus-prepared game screen is sent to a display of a corresponding PC (indicated by arrows III shown in Fig. 3). Since the user of the PC 510 has participated in a game as a player, the game screen is also sent to a display of the PC 510.

Such a mechanism of the network game enables execution of a game, in which characters controlled by the players of the PCs 530 and 540 battle against characters controlled by the players of PCs 510 and 520.

Game screens sent to the respective PCs show the same situation. However, the game screens are not always identical in detail with each other. For instance, the game screens are images viewed from the characters controlled by the players of the respective PCs or are those centered on the characters.

Here, there has been described a network game of IP-address-specified type. In addition, there are network games of various other types. Of these network games, a network game of private server type has recently become dominant. The network game utilizes a server which is provided in the Internet and managed by a game manufacturer or distributor. Since relevant addresses are in public view, players are easily gathered together. Further, the server has high performance, thereby enabling simultaneous participation of thousands of players in a game.

Since the respective PCs are connected to a global network, such as the Internet, such a configuration enables a player to battle against an opponent who under ordinary circumstances would not be able to engage in battle, such as an overseas player or an elderly or underage player.

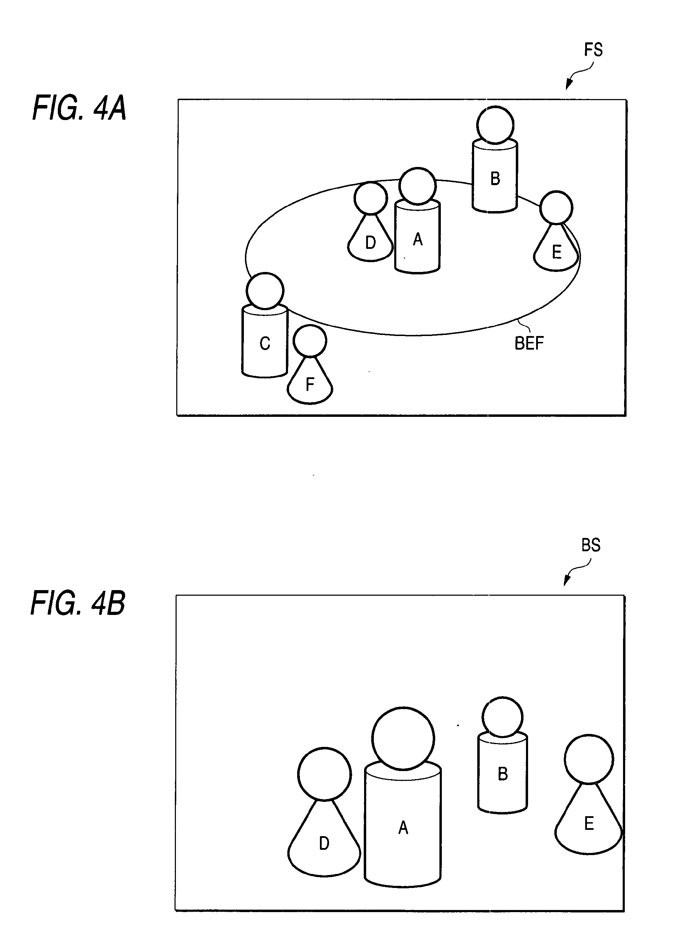

The game screen switching method according to the present invention will now be described by reference to Figs. 4A and 4B.

In the present invention, when alliance characters and enemy characters have satisfied certain requirements on a field screen, the field screen is switched to another screen called a battle screen. Objects to be displayed on the battle screen are limited to those located within a certain area on the field screen. Hereinafter the area is called a "battle entry field." Throughout the specification, a simple expression "game screen" is used for referring to a screen in a certain display mode, in a collective and conceptual manner. The game screen does not specify frame images in a motion picture. For instance, a game screen refers to an image taken as a field screen or a battle screen. Accordingly, switching between game screens refers to displaying a game that has been displayed in a certain display mode in another display mode which greatly differs from the previous display mode in terms of a viewpoint, an object of display, or scale.

Fig. 4A shows an example display of a field screen FS. Here, a field screen FS usually means a screen for displaying a motion picture image, the image expressing a so-called field status; e.g., a main character proceeding through a grassy field or cavern with a view toward acquiring treasure or a specific objective. In this case, the field screen FS means a screen appearing on a display of the player who controls a character in an noncombatant state.

Six characters are displayed on the field screen FS shown in Fig. 4A. The assumption is made that each of the six characters is controlled by one player (remotely). As a matter of course, some of the characters may be controlled by a computer. Further, the assumption is made that the field screen FS is displayed for the player who controls the character A (the main character).

Characters A, B, and C are alliance characters having columnar bodies, and characters D, E, and F are enemy characters having conical bodies. Accordingly, the players who control the alliance characters basically control their characters so as to defeat the enemy characters.

As shown in Fig. 4A, when the alliance character A comes across the enemy character D, the screen provided for the player who controls the character A is switched to a battle screen BS shown in Fig. 4B. The battle screen BS is displayed from the viewpoint of the character A, in an enlarged mode, or while the character A is taken as the center, so that fighting actions of the character A are displayed in more detail, thereby enabling the player to issue a suitable instruction. This feature also shows that an input mode of the input device used for moving the character on the field screen FS and the configuration of the screen have been changed to those for battle use.

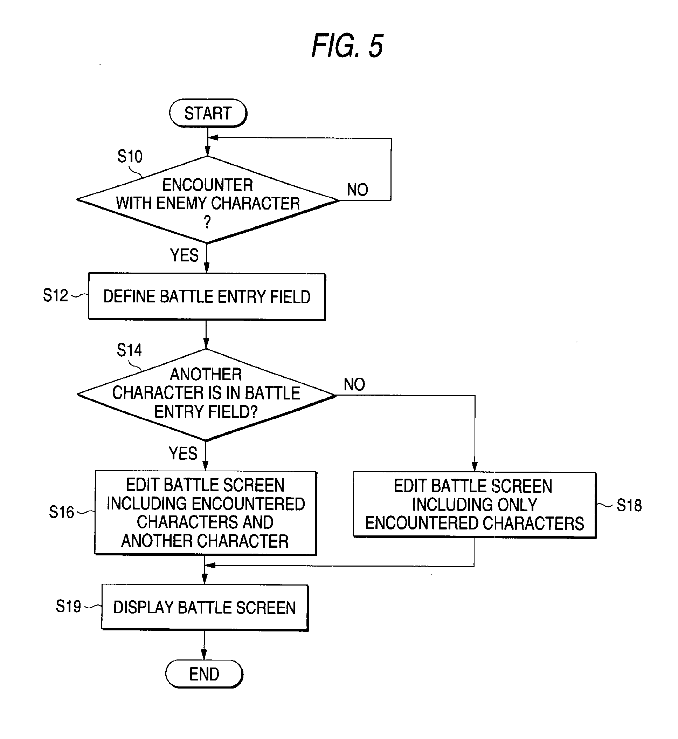

Referring to a flowchart shown in Fig. 5, there is described the method of switching the field screen FS shown in Fig. 4A to the battle screen BS shown in Fig. 4B. Processes represented in the flowchart are executed by a PC of each player in association with the player's character.

First, in step S10, a determination is made as to whether or not the character assigned to the player (here character A) has encountered any of the enemy characters. If the character has not encountered any enemy character (i.e., when NO is selected in step S10), processing pertaining to step S10 is again performed after lapse of a given time period. Thereafter, the determination and processing are iterated.

In connection with several points corresponding to the geometries of respective characters, the characters are managed in two-dimensional or three-dimensional coordinates on the field screen FS. One or some of the points having approached a certain range from a predetermined coordinate of an enemy character is considered an encounter. Depending on setting of a range, encounter may be determined even when a character of interest has not yet actually encountered an enemy character on a field screen FS. Conversely, setting may be effected such that remote contact having arisen between a character of interest and an enemy character is determined not to be an encounter. Moreover, a screen may be switched under condition that an alliance character and an enemy character located within a predetermined range have made eye contact.

When in step S10 it is determined that the character has encountered an enemy character (when YES is selected in step S10), processing proceeds to step S12, where a battle entry field is defined. Here, the battle entry field is an area in which characters to appear on a screen coming next; i.e., a battle screen BS, are to be determined. As shown in Fig. 4A, the battle entry field BEF is a circle of predetermined radius centered on the character A when the character A has encountered the enemy character D. In some situations, the battle entry field may actually appear on the field screen FS. As shown in Fig. 4A, when a three-dimensional expression technique having depth is employed in the field screen FS, the battle entry field BEF is displayed in the form of an ellipse. There is no necessity of displaying the battle entry field BEF in the form of a curved figure; the battle entry field BEF may assume an arbitrary shape such as a triangular or rectangular shape. Further, in view of a major purpose of enlarging a battle scene, a battle entry field BEF may be defined while an arbitrary point is taken as a reference, so long as a character of interest and another character having been encountered by the character are included in the battle entry field BEF. For example, the circle may be centered not on the character A, as has been described previously, but on a point where the character A has encountered the enemy character D. Further, the battle entry field BEF may be defined such that a circle is constituted so as to include the point on the circumference thereof. Moreover, even when the battle entry field BEF is centered on the character A, the center of the field can be construed in various manners.

Subsequently, processing proceeds to step S14, where a determination is made as to whether or not another character; i.e., a character other than the character A and the character D whom the character A has encountered, is located in the thus-defined battle entry field BEF, at a point in time in which the encounter has arisen. If another character is within range (when YES is selected in step S14), processing proceeds to step S16. A battle screen BS is edited so as to include the other character located in the battle entry field BEF, as well as the characters A and D who have encountered each other. Here, the other character is included in the battle screen BS regardless of whether or not the character is an ally or an enemy. The battle screen BS is edited such that the positional relationship between the characters appearing on the field screen FS is maintained. As a result, the battle screen BS is displayed by enlarging a portion of the field screen FS.

In contrast, no other character is within the range (when NO is selected in step S14), processing proceeds to step S18. A battle screen BS is edited so as to include only the two characters A and D who have encountered each other. Even in this case, the positional relationship between the characters is retained in the same manner as when the characters have been displayed on the field screen FS.

Finally, when edition of the battle screen BS has finished, in step S19 the entire game screen provided for the player who controls the character located within the battle entry field BEF is switched to the battle screen BS. The processes are performed for the character A. However, the result of edition of the battle screen BS is transferred, via the game server, to the personal computer of a player for which the result must be displayed (i.e., a player who controls the character having been determined to be located in the battle entry field BEF).

Through the foregoing processing, the game screen, which is provided for the player who controls the character who has been involved in battle as a result of initiation of a battle between the characters A and D and is located in the vicinity of the two characters, is also switched to the battle screen BS. An example battle screen BS is shown in Fig. 4B. The example shows a game screen provided for the player who controls the character A. For this reason, the character A is located at the center of the screen. However, there is no necessity for displaying the same screen for all the players; for instance, the character D may be displayed in the center of the game screen provided for the player who controls the character D. Likewise, the character B may be displayed in the center of the game screen provided for the player who controls the character B.

The battle screen BS shown in Fig. 4B may be displayed as an image captured from the viewpoint of the character A. In this case, the character A does not appear in the battle screen BS. In addition, different battle screens can be provided in various manners to players who control characters located within a battle entry field BEF.

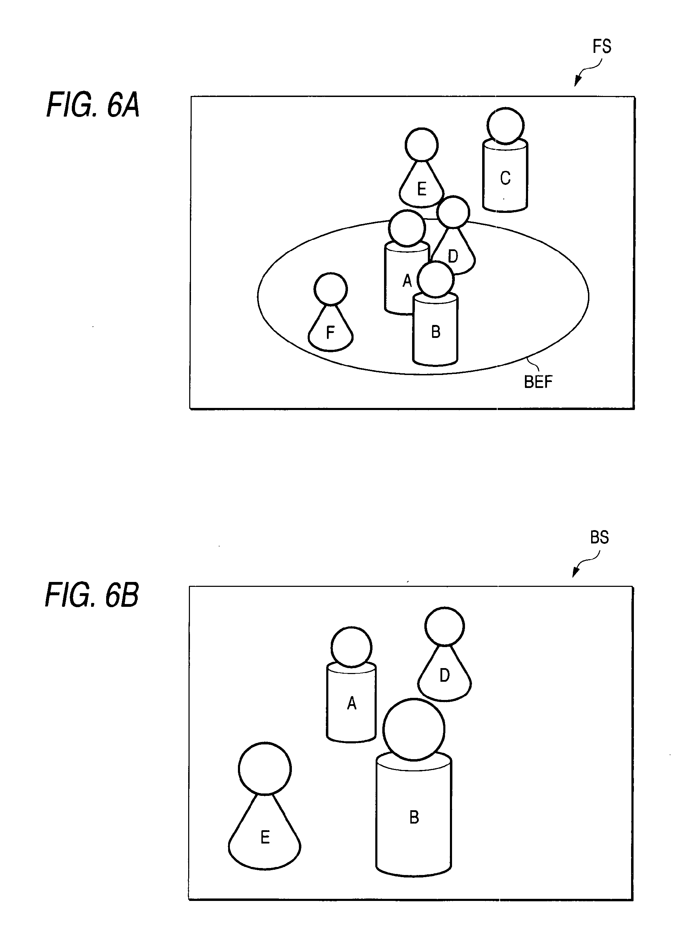

Referring to Figs. 6A and 6B, there will now be described a game screen, which is displayed for the player who controls the character B, under the same situation as that shown in Fig. 4A.

A field screen FS shown in Fig. 6A differs from that shown in Fig. 4A, and the character B is displayed in the center of the screen. In this case, the character B *per* se has not encountered any enemy character. However, the character B has been located in the vicinity of the character A who has commenced battle (i.e., the character B has been located within the battle entry field BEF computed while the character A is taken as the center), and as a result the character B is involved in the battle. At this time, the character B may attempt to defeat the enemy character D in a joint effort with the alliance character A or may have found another enemy character E and attempt to battle the other enemy character E. Alternatively, the character B may simply move across the field. Thus, regardless of intention of the character B, the field screen FS shifts to the battle screen BS shown in Fig. 6B as a result of the characters A and D, who are controlled by other players, having encountered each other. Here, in contrast with the battle screen BS shown in Fig. 4B, the character B is usually displayed in the center of the screen.

The player who controls the character B may instruct the character B to attack the enemy character D while taking sides with the alliance character A or may instruct the character B to attack another enemy character E. As an alternative, the character B may leave the battle entry field BEF without performing such an attack. A screen display appearing when the character B has gone out of the battle entry field BEF will be described later.

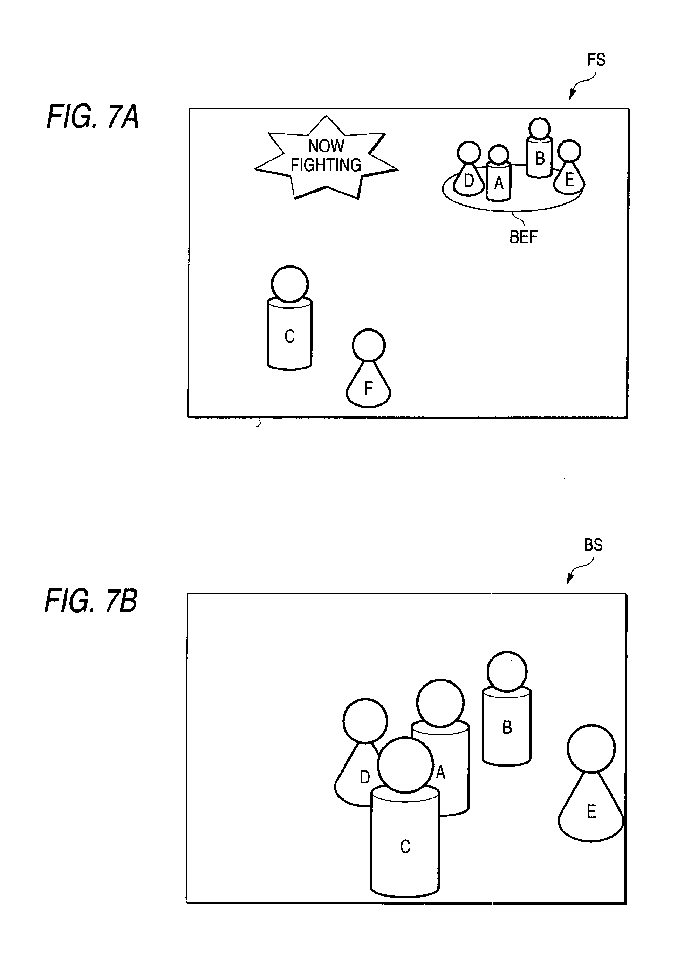

Referring to Figs. 7A and 7B, the game screen switching method according to the present invention will be described further.

The field screen FS shown in Fig. 7A is an example screen displayed for the player who controls the alliance character C who is not located in the battle entry field BEF when a battle has begun between the alliance character A and the enemy character D, as shown in Fig. 4A.

On the screen, a battle is effected between the alliance character A and the enemy character D. Legends "Now Fighting" or "Now in Battle" appear on the field screen FS. In addition, the battle entry field BEF and the characters located therein are also displayed. Such a display is particularly effective in the network game. By virtue of the display, the player can roughly ascertain the situations of the remaining characters and the nature of control operations performed by the remaining players in accordance with the situations. Details of the battle screen BS shown in Fig. 4B are displayed in the battle entry field BEF in a reduced manner. At this time, the field screen FS is to appear on the display of the player who controls the character C. In principle, there is no necessity of displaying the battle entry field BEF from the viewpoint of a specific character.

In this stage, the player who controls the character C can choose from several options with regard to action of the character C.

A first option is to move the character C so as to accomplish another object, such as proceeding toward a treasure, without involvement in a battle performed in the battle entry field BEF. If the character C has gone away from the battle entry field BEF, display of the battle entry field BEF disappears from the field screen FS.

A second option is to make battle against an adjacent enemy character F. If the character C is moved so as to encounter the character F, a battle against the character F is initiated. A battle screen BS having the characters C and F displayed appears in the same manner as the battle screen BS shown in Fig. 4B. At this time, as has been described in connection with the flowchart shown in Fig. 5, another battle entry field BEF is defined aside from the existing battle entry field BEF. As a result, if there arises a character which is included in both battle entry fields, the character can be processed so as to be included in either of the two battle entry fields (e.g., the battle entry field BEF that has arisen first). Further, there can be effected control operation such that battle screens corresponding to the two battle entry fields are displayed simultaneously for the player who controls the character existing in an overlap between the two battle entry fields.

A third option is to cause the character C to proceed to the existing battle entry field BEF and participate in the attack in order to take sides with the character A. In this case, a battle screen BS shown in Fig. 7B is provided for the player who controls the character C. The battle screen BS is analogous to the battle screen BS shown in Fig. 4B, wherein the character C is additionally displayed in the center of the screen. The battle screen BS shown in Fig. 4B, in which a corresponding character is displayed in the center, is displayed simultaneously for the players who control the characters included in the battle entry field BEF. Here, the character C is added to these screens.

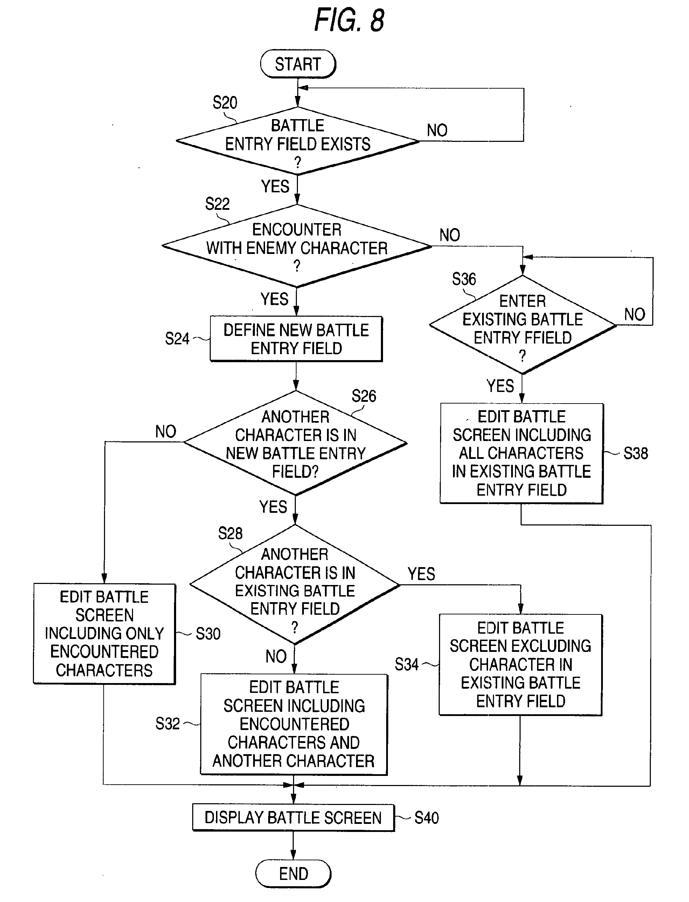

Referring to Fig. 8, there will be described a flow for controlling operations of characters when a battle entry field BEF has been formed. The process represented by the flowchart is performed by a PC of each player in connection with a character assigned to the player.

First, in step S20 a determination is made as to whether or not a battle entry field BEF has already existed. So long as a battle entry field BEF has arisen in any location within the game, there is no necessity of displaying the battle entry field BEF on the field screens of all the players.

If no battle entry field BEF has been prepared (when NO is selected in step S20), there is no necessity of performing processing pertaining to this process, and processing pertaining to the process described in connection with Fig. 5 is performed. Accordingly, in this case, the processing is terminated, and the processing will be activated when an instruction for moving a character is issued again. As an alternative, processing pertaining to step S20 is iterated, thereby continuously monitoring preparation of a battle entry field BEF. A determination is made as to whether or not a battle entry field BEF is now present, by reflecting information about a battle entry field BEF on a predetermined location, such as memory, in real time and checking the information.

If in step S20 it is determined that a battle entry field BEF has already existed (when YES is selected in step S20), in step S22 a determination is made as to whether or not the character (here character C) has encountered any enemy character. The manner of rendering a determination is the same as that employed in the process shown in Fig. 5.

When it is determined that the character has encountered an enemy character (when YES is selected in step S22), a new battle entry field BEF' is defined in step S24. The preparation is performed in the same process as that described in connection with Fig. 5. In step S26, a determination is made as to whether or not another character is included in a new battle entry field BEF'.

When no other character is included in the new battle entry field BEF' (when NO is selected in step S26), processing proceeds to step S30, where there is edited a battle screen BS including only the characters for which encounter has been made. If another character is included in the new battle entry field BEF' (when YES is selected in step S26), another determination is made in step S28 as to whether or not another character is included in the existing battle entry field BEF.

When no other character is included in the existing battle entry field BEF (when NO is selected in step S28), in step S32 a battle screen BS is edited so as to include the character for which encounter has been made and another character. In contrast, when another character is included in the existing battle entry field BEF (when YES is selected in step S28), in step S34 the battle screen BS is edited with the exception of the character. In such a case, the character may be displayed in all the battle entry fields to which the character belongs. Concurrently, a corresponding battle entry field BEF can be provided individually as a battle screen BS to the player who controls the character. As an alternative, it can be considered that the characters that have been excluded as belonging to other battle entry fields are displayed in a specific display manner; for example, the characters may be displayed translucently so as to express that the characters are not directly relevant to the battle.

When in step S22 it is determined that the character has not encountered any enemy character (when NO is selected in step S22), processing proceeds to step S36, where a determination is made as to whether or not the character of interest (i.e., the character C) has entered the existing battle entry field BEF. The determination is made depending on whether or not coordinates representing the position of the character C have moved into the battle entry field BEF. A plurality of points may be provided as coordinates representing the position of a character, depending on the geometry of the character. Entry can be determined when some of managed points, the center point, or all the points have entered a battle entry field BEF.

Further, entry can be determined when the character of interest has encountered a character located within a battle entry field BEF or when the character of interest has encountered the character ascribable to occurrence of the battle entry field BEF.

When the character has not entered the existing battle entry field BEF (when NO is selected in step S36), a determination pertaining to step S36 is iterated at predetermined intervals. Further, the processing is terminated immediately. When the character C is moved again, processing pertaining to the process may be activated again.

When the character has entered the existing battle entry field BEF (when YES is selected in step S36), processing proceeds to step S38, where a battle screen BS is edited so as to include both the character (i.e., the character C) and the character having already been positioned in the existing battle entry field BEF.

When edition of the battle screen BS for each case has been completed, in step S40 the battle screen BS is displayed as a game screen for the player who controls the character (here character C). Further, there is edited a battle screen BS corresponding to the player of the character whose status has been changed through edition of the battle screen BS. The thus-edited battle screen BS is transferred to PCs of respective players.

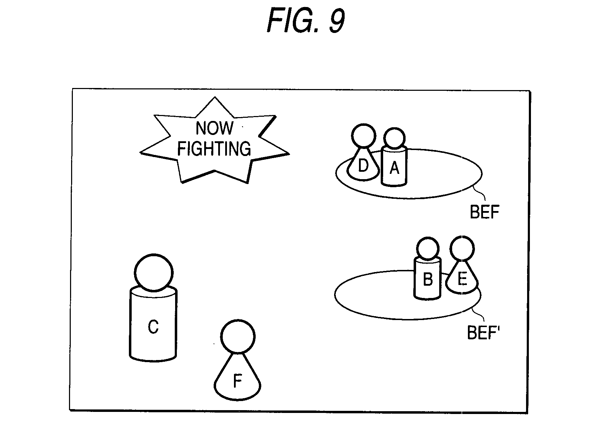

Fig. 9 shows an example field screen FS. Under the circumstances appearing on the field screen FS shown in Fig. 4A, the character E has left the battle entry field BEF, and the character B has also left the battle entry field BEF to chase the character E. When the characters B and E have met each other, the field screen FS shown in Fig. 9 appears on the screen of the player of the character C.

In the example, two battle entry fields are provided: one field BEF is for battle between the characters A and D, and the other field BEF' is for battle between the characters B and E.

Even in this case, three options are available to the character C, as mentioned previously. At this time, the character C can enter either of two battle entry fields.

When the enemy character E remains in the battle entry field BEF', the illustration shown in Fig. 4B is provided for the player of the enemy character E. Simultaneously with the character E having left the battle entry field BEF', a field screen FS such as that shown in Fig. 4A (the character E is outside the field screen FS) appears. When the character B has contacted the enemy character E, a new battle entry field BEF' is created. If no other character is included in the battle entry field BEF', a battle screen BS including solely the characters B and E appears.

Similarly, when the character B remains in the battle entry field BEF, the screen shown in Fig. 4B is provided for the player of the character B. However, simultaneously with the character B having left the battle entry field BEF, a field screen FS such as that shown in Fig. 4A (the characters B and E are outside the battle entry field BEF) is displayed. When the character B has contacted the enemy character E, a new battle entry field BEF' is created. If no other character is included in the battle entry field BEF', a battle screen BS including solely the characters B and E appears.

As mentioned above, each character returns from the second game screen to the first game screen by leaving a battle entry field BEF. Even when the battle arising in the battle entry field BEF has been completed, a character may return to the first game screen. For instance, provided that the characters B and E are fighting each other in the battle entry field BEF and that the character E has defeated the character B in that battle, the second game screen appearing on the display of the character of the character E is switched to the first game screen or another end screen. In the present embodiment, a battle between characters is to be displayed on the second game screen. However, a predetermined event other than a battle may be displayed. In this case, the requirement for effecting return from the second game screen to the first game screen is termination of an event.

The game screen switching method according to the present invention has been described, by focusing primarily on control operations of the alliance characters A and C. Likewise, the game switching method according to the present invention can be applied to control operation of an enemy character. Such control operation of a character is not limited to a player (human); the present invention can also be applied to a character whose movement is automatically controlled by a computer.

There is no necessity for limiting requirements to effect switching between screens under the present method to encounter between an enemy character and an alliance character. Further, there is no necessity for limiting a battle screen appearing as a result of occurrence of an encounter to a screen displaying details of a battle.

In the embodiment that has been described thus far, each character is placed in one plane on a field screen, and a battle entry field is set on the plane. In a case where a plurality of characters are located in a three-dimensional space, a battle entry field can be set as a predetermined three-dimensional space (a battle entry field in this case). Accordingly, birds flying over the character that has made an encounter or animals located underground at the location where encounter has been made can be displayed on the battle screen.

As has been described, under circumstances where a field screen is displayed in a game under the game screen switching method according to the present invention, upon satisfaction of given requirements, such as an alliance character having encountered an enemy character, a control operation is effected so as to display all characters located within a certain range from the location where encounter has arisen, in the form of a battle screen. The characters located nearby the battle are simultaneously brought into a battle screen, and hence a natural shift in screen during a battle is effected.

Moreover, a plurality of players control their characters during a game, and there are provided images that differ from player to player, such as images viewed from respective characters. If battle has arisen between characters as a result of satisfaction of requirements, such as characters having encountered each other, a battle screen is provided for each of the players who control characters who are located within the range but are not those who have started the battle. Hence, a unique sense of realism can be imparted to the players as if they were involved in an actual battle.

Control operation is performed such that the location of a predetermined range is displayed on a field screen for players of characters located outside the predetermined range, thereby evidently giving the players the battle location and the confrontation thereof.

Further, when a battle is started within a predetermined range, characters located outside the range can participate in the battle by entering the range of battle. Control operation can be effected so as to display a corresponding battle screen to the players of the characters who have participated in the battle. A player can conceive a wide range of variations in game strategy, such as entry into a battle, retreat from a battle, and avoiding a battle.

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defined in the appended claims.

## Claims

1. A method of switching a game screen displayed to each of a plurality of players who controls an associated character in a game, comprising the steps of:
preparing a first game screen in which at least a first character controlled by a first player and a second character controlled by a second player among the plural characters are displayed;
displaying the first game screen to at least the first player and the second player;
detecting an encounter between the first character and the second character on the first game screen;
defining a field having a predetermined range on the first game screen so as to include the first character and the second character, when the encounter is detected;
detecting whether a character other than the first character and the second character is in the defined field;
preparing a second game screen in which the detected characters existing in the field are displayed while retaining their relative position relationship defined in the first game screen; and
displaying the prepared second game screen to the players who control the characters displayed therein.

2. The game screen switching method as set forth in claim 1, wherein the range of the field is determined with reference to either one of a position of the first character, a position of the second position and a position at which the first character and the second character are encountered.

3. The game screen switching method as set forth in claim 1, wherein the second game screen is prepared so as to enlarge the characters in the field viewed from a predetermined position.

4. The game screen switching method as set forth in claim 1, wherein the second game screen displays that the first character and the second character are controlled to fight with each other.

5. The game screen switching method as set forth in claim 1, further comprising the step of displaying the first game screen to at least one player who controls a character leaving the field.

6. The game screen switching method as set forth in claim 1, further comprising the step of displaying the first game screen to the first player and the second player, when a predetermined event performed by the first character and the second character is finished.

7. The game screen switching method as set forth in claim 6, wherein the event is a battle between the first character and the second character.

8. The game screen switching method as set forth in claim 1, further comprising the steps of:
editing the first game screen so as to display the field and the characters existing within the field, when a third character controlled by a third player is outside of the field; and
displaying the edited first game screen to the third player.

9. The game screen switching method as set forth in claim 8, further comprising the steps of:
detecting that the third character enters into the field;
editing the second game screen in which all the characters in the field including the third character are displayed while retaining their relative position relationship defined in the first game screen; and
displaying the edited second game screen to the players who control the characters displayed therein.

10. The game screen switching method as set forth in claim 9, further comprising the step of displaying the first game screen to at least one player who controls a character leaving the field.

11. The game screen switching method as set forth in claim 9, further comprising the step of displaying the first game screen to players, when a predetermined event performed by the associated characters is finished.

12. The game screen switching method as set forth in claim 11, wherein the event is a battle between the associated characters.

13. The game screen switching method as set forth in claim 1, wherein one of the first player and the second player is realized by a computer.

14. The game screen switching method as set forth in claim 9, wherein at most two of the first player, the second player and the third player are realized by a computer.

15. The game screen switching method as set forth in claim 1, wherein the players control the associated characters via a network, and the game screens are provided to the players via the network.

16. A game machine, comprising:
a plurality of displays, each displaying a game screen to each of a plurality of players who controls an associated character in a game;
a plurality of controllers, each provided for the players to control the associated characters;
a first screen generator, which prepares a first game screen in which at least a first character controlled by a first player and a second character controlled by a second player among the plural characters are displayed;
a first screen provider, which provides the first game screen to displays for at least the first player and the second player;
a first detector, which detects an encounter between the first character and the second character on the first game screen;
a field generator, which defines a field having a predetermined range on the first game screen so as to include the first character and the second character, when the first detector detects the encounter;
a second detector, which detects whether a character other than the first character and the second character is in the defined field;
a second game screen generator, which prepares a second game screen in which the detected characters existing in the field are displayed while retaining their relative position relationship defined in the first game screen; and
a second game screen provider, which provides the prepared second game screen to displays for the players who control the characters displayed therein.

17. The game machine as set forth in claim 16, wherein the field generator determines the range of the field with reference to either one of a position of the first character, a position of the second position and a position at which the first character and the second character are encountered.

18. The game machine as set forth in claim 16, wherein:
the first screen generator edits the first game screen so as to display the field and the characters existing within the field, when a third character controlled by a third player is outside of the field; and
the first screen provider provides the edited first game screen to a display for the third player.

19. The game machine as set forth in claim 16, wherein at least the displays and the controllers are connected via a network.

20. A network game system for performing a game in which a plurality of characters are controlled by associated players, comprising:
a network;
a plurality of game machines connected with each other via the network, each game machine associated with each of the players;
a display provided in each game machine, which displays a first game screen to the associated player;
a controller provided in each game machine, through which the associated player controls an associated character;
a memory provided in one of the game machines, to which each game machine accesses to store a first data indicating a position of the associated character on the first game screen;
a first display controller, provided in each game machine, which moves the associated character displayed on the first game screen, in accordance with an instruction input from the associated player via the controller, and which updates the first data so as to indicate a moved position;
a first detector, provided in each game machine, which detects an encounter between the associated character and another characters with reference to the first data, every time when the associated character is moved;
a field generator, provided in each game machine, which defines a field having a predetermined range on the first game screen so as to include the encountered character, when the first detector detects the encounter, and which stores a second data indicating a position of the field; and
a second display controller, provided in each game machine, which prepares a second game screen in which characters existing in the field are displayed with reference to the first data, while retaining their relative position relationship defined in the first game screen, and which switches the first game screen to the second game screen when the associated character is in the field.

21. The network game system as set forth in claim 20, further comprising:
a second detector, provided in each game machine, which detects whether the associated character leaves the field when the second game screen is displayed with reference to the first data and the second data; and
a third display controller, provided in each game machine, which switches the second game screen to the first game screen when the second detector detects that the associated character leaves the field.

22. The network game system as set forth in claim 20, further comprising:
a fourth display controller, provided in each game machine, which switches the second game screen to the first game screen when an event conducted on the second game screen is finished.

23. The network game system as set forth in claim 20, further comprising:
a fifth display controller, provided in each game machine, which edits the first game screen so as to display the field and the characters existing within the field, when the first game screen is displayed on the display while the second game screen is displayed on another display.

24. The network game system as set forth in claim 20, wherein a part of the player is realized by a computer connected to the network.

25. A program for causing a computer to execute the game switching method as set forth in any one of claims 1-15.
